# EUROPÄISCHE PATENTANMELDUNG

(11) **EP 1 046 640 A2**
(43) Veröffentlichungstag der Anmeldung: **25.10.2000**
(21) Anmeldenummer: 00107821.1
(22) Anmeldetag: 12.04.2000
(51) Int. Cl.: C07F 5/02

(54) **Verfahren zur Herstellung von substituierten Phenyl-boronsäuren**

(30) Priorität: 21.04.1999 DE 19917979
(71) Anmelder: Clariant GmbH, 65929 Frankfurt am Main (DE)
(72) Erfinder: Haber, Steffen, Dr., 76829 Landau/Pfalz (DE); Meudt, Andreas, Dr., 65439 Flörsheim-Weilbach (DE); Scherer, Stefan, Dr., 64572 Büttelborn (DE); Vollmüller, Frank, Dr., 55130 Mainz (DE)

(57) **Zusammenfassung**

Verbindungen der Formel (I) 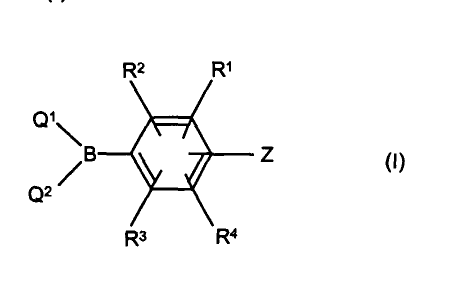 worin
Q¹ und Q² jeweils OH sind oder ein trimeres Borsäureanhydrid bilden,
Z die Bedeutung CHO, CH₂Y, X oder eine geschützte Aldehydgruppe hat und X CN, COOH, COCl, CONH₂ oder C(OR)₃ und Y OH oder NH₂ sind, und sich Z in o-, m-oder p-Position zum Boronsäurerest befindet,
   werden hergestellt, indem man

a) eine Verbindung der Formel (II) 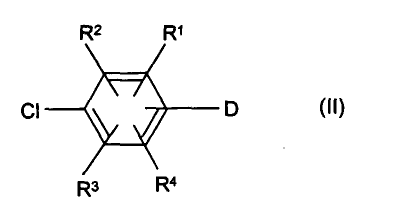 mit Mg, und in Gegenwart einer Anthracen-Verbindung und gegebenenfalls eines Übergangsmetallhalogenids und gegebenenfalls eines Mg-Halogenids oder in Gegenwart eines Übergangsmetallhalogenids und gegebenenfalls eines Mg-Halogenids zum entsprechenden Arylmagnesiumchlorid umsetzt,
b) dieses mit einem Borsäureester der Formel B(OR 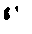 )₃ umsetzt und hydrolysiert, wobei die Aldehydschutzgruppe entfernt wird,
c) und gegebenenfalls die freie Aldehydgruppe oxidiert oder reduziert.

## Beschreibung

Substituierte Phenylboronsäuren, z.B. Cyano-phenylboronsäuren, haben große technische Bedeutung als Wirkstoffvorprodukte, insbesondere als Vorprodukte für entsprechend substituierte Biphenyl-Derivate, die als AT (II)-Antagonisten verwendet werden, oder auch als Vorprodukte für flüssigkristalline Verbindungen, als Flüssigkristalle oder als Bestandteil von flüssigkristallinen Mischungen. Phenylboronsäuren lassen sich mit Hilfe von in der Literatur beschriebenen Methoden mit Halogenaromaten übergangsmetallkatalysiert zu Biphenyl-Derivaten kuppeln (N. Miyaura et al., Tetrahedron Lett., 3437 (1979); A.L. Casalnuovo et al., J. Amer. Chem. Soc. 112, 4324 (1990), N. Miyaura et al., Chem. Rev. 95 (1995), 2457-2483).

Die herkömmlichen Syntheserouten für Cyanophenylboronsäuren, entweder ausgehend von Carboxyphenylboronsäure über die Bildung des Säureamids und anschließender Bildung der Cyanoverbindung oder ausgehend von dem entsprechend substituierten Brombenzonitril mittels Umsetzung mit Organolithium-Verbindungen wie Butyllithium und anschließender Reaktion mit einem Trialkylborat, erfüllen die Aufgabe einer ökonomisch sinnvollen und technisch einfach durchzuführenden Synthese für Cyanophenylboronsäuren nicht, da zum einen der Syntheseweg zu viele Synthesestufen beinhaltet, zum anderen Organolithium-Verbindungen sehr teuer und gefährlich in der Handhabung sind.

Die Grignardreaktion mit Chlorbenzaldehyd verläuft mit geringen Ausbeuten und sehr langsam, wodurch für industrielle Zwecke die Verwendung des teuren Brombenzaldehyds bislang notwendig war (H. Jendralla et al., Liebigs Ann. 1995, 1253-1257).
In WO 98/02 443 werden Übergangsmetallverbindungen, gegebenenfalls in Kombination mit Cokatalysatoren, zur Aktivierung aromatischer Chlorverbindungen für Grignardreaktionen eingesetzt, jedoch nicht für chlorierte aromatische Aldehyde oder deren geschützte Derivate. Vielmehr ist bekannt, daß Ether- und Acetalschutzgruppen die Reaktivität des Magnesiums durch Komplexbildung an der Magnesium-Oberfläche erheblich herabsetzen (D.E. Pearson et al., J. Org. Chem., 1959, 24, 504-509).

Aufgrund des Interesses an dieser Substanzklasse besteht ein Bedürfnis an einer ökonomischen und technisch einfach durchzuführenden Synthese von substituierten Phenylboronsäuren, insbesondere von Cyano-phenylboronsäuren.

Diese Aufgabe wird gelöst durch ein Verfahren zur Herstellung einer Verbindung der Formel (I) 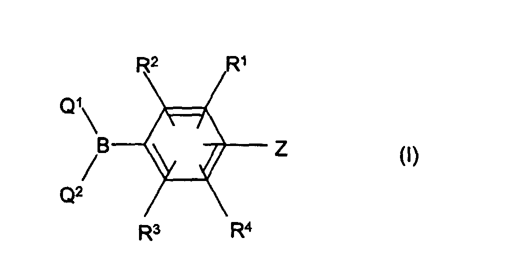 worin
Q¹ und Q² jeweils OH oder zusammen einen zweiwertigen Rest der Formel (Ib) bedeuten 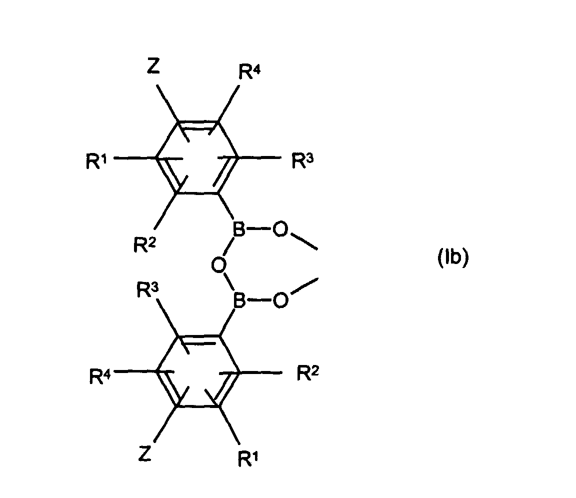
Z die Bedeutung -CHO, D, -CH₂Y oder X hat, wobei D eine geschützte Aldehydgruppe, Y Hydroxyl oder Amino, und X Cyano, COOH, COCl, CONH₂ oder C(OR)₃ mit R gleich C₁-C₅-Alkyl oder Phenyl, bedeuten, und wobei sich Z in ortho-, meta- oder para-Position zum Boronsäurerest befindet;
R¹ bis R⁴ unabhängig voneinander die Bedeutung Wasserstoff, C₁-C₁₂-Alkyl, C₂-C₁₂-Alkenyl, C₂-C₁₂-Alkinyl, C₃-C₁₂-Cycloalkyl, (C₁-C₁₂-)-Alkoxy, O-Phenyl, O-Benzyl, Aryl, Heteroaryl, Fluor, N(Alkyl)₂, N[Si(C₁-C₄-Alkyl)₃]₂ oder CF₃ haben, oder R¹ und R², und/oder R³ und R⁴, zusammen einen 5- oder 6-gliedrigen aliphatischen oder aromatischen Ring bilden;
dadurch gekennzeichnet, daß man
a) eine Verbindung der Formel (II) 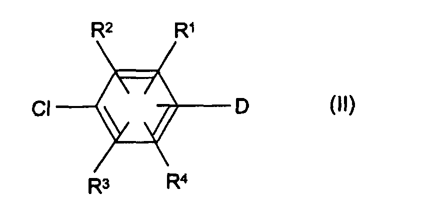 mit Magnesium, sowie in Gegenwart
   i) einer Anthracen-Verbindung und gegebenenfalls eines Übergangsmetallhalogenids und gegebenenfalls eines Magnesiumhalogenids; oder
   ii) eines Übergangsmetallhalogenids und gegebenenfalls eines Magnesiumhalogenids,
   wobei die Anthracen-Verbindung eine Verbindung aus der Gruppe Anthracen, Mg-Anthracen, substituiertes Anthracen und substituiertes Mg-Anthracen ist, zu einem Arylmagnesiumchlorid der Formel (III) umsetzt 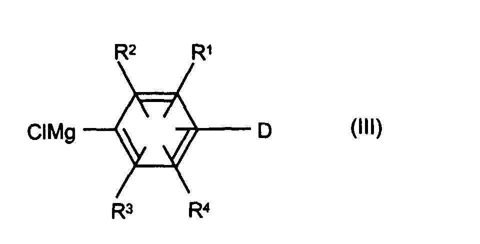
b) die Verbindung der Formel (III) mit einem Borsäureester der Formel B(OR 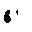 )₃, worin R' gleich oder verschieden voneinander ist und für einen geradkettigen oder verzweigten (C₁-C₈)-Alkylrest, einen unsubstituierten oder durch eine oder zwei (C₁-C₄)-Alkylgruppen oder (C₁-C₄)-Alkoxygruppen substituierten Phenylrest, insbesondere für einen geradkettigen oder verzweigten (C₁-C₄)-Alkylrest oder einen unsubstituierten Phenylrest, steht, umsetzt und zu einer Verbindung der Formel (IV) hydrolysiert, 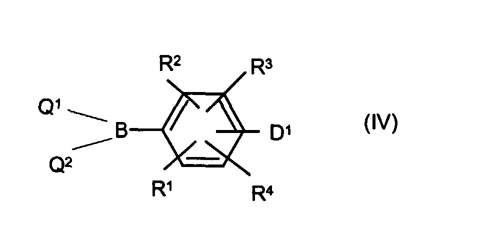 worin
   D¹ die Bedeutung CHO oder D hat;
   Q¹ und Q² jeweils OH oder zusammen einen zweiwertigen Rest der Formel (IVb) bedeuten 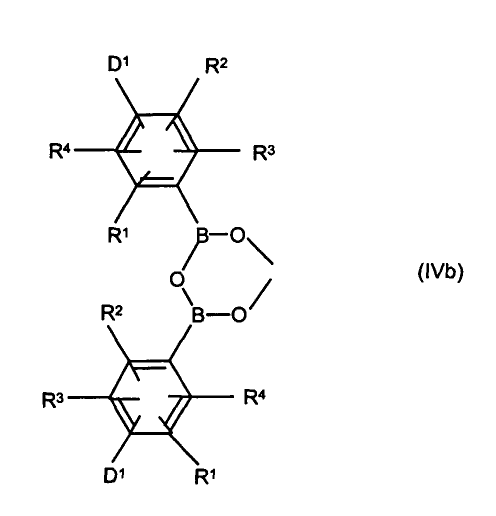
c) gegebenenfalls die Verbindung der Formel (IV) oder (IVb) mit D¹ gleich CHO in eine Verbindung der Formel (I) mit Z gleich X oxidiert, oder gegebenenfalls in eine Verbindung der Formel (I) mit Z gleich CH₂Y reduziert.

In den vorstehenden Definitionen bedeutet Alkyl vorzugsweise C₁-C₄-Alkyl, Aryl bedeutet vorzugsweise Phenyl und Alkylaryl bedeutet vorzugsweise Benzyl und Alkoxy bedeutet vorzugsweise C₁-C₄-Alkoxy.
Bevorzugte Reste R (Z gleich -C(OR)₃) sind C₁-C₄-Alkyl, insbesondere Methyl, Ethyl oder Phenyl.

Bevorzugte Reste R¹ bis R⁴ sind Wasserstoff, Methyl, Ethyl, Propyl, Butyl, Methoxy, Ethoxy, Propoxy, Butoxy und Fluor.
Der Rest D ist vorzugsweise ein Acetal der Formel (V) oder (VI) 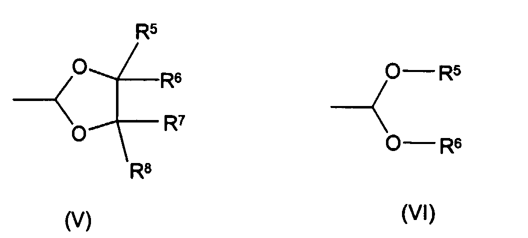 worin R⁵ bis R⁸ gleich oder verschieden sind und die Bedeutung Wasserstoff, C₁-C₁₂-Alkyl oder Phenyl haben, oder R⁶ und R⁷ zusammen einen 5- oder 6-gliedrigen aliphatischen oder aromatischen Ring bilden;
oder D ist ein Oxazolidin der Formel (VII) oder ein Oxazolin der Formel (VIII) 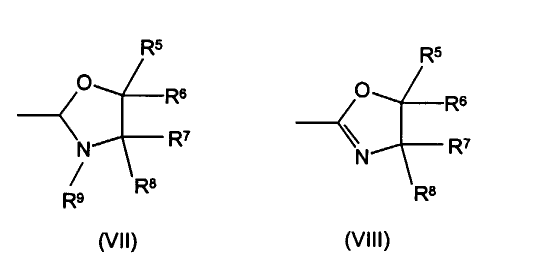 worin R⁵ bis R⁸ wie vorstehend definiert sind und R⁹ die Bedeutung C₁-C₆-Alkyl, Phenyl oder Benzyl, gegebenenfalls am Aromaten substituiert, hat.

Es war überraschend, daß Verbindungen der Formel (I), ausgehend von ortho-, meta- oder para-Chlorbenzaldehyd, in der erfindungsgemäßen Verfahrensweise in guten Ausbeuten hergestellt werden können.

Bevorzugte Borsäureester B(OR')₃ sind Borsäuretrimethylester, Borsäuretriethylester, Borsäuretri-n-propylester, Borsäuretriisopropylester, Borsäuretri-n-butylester und Borsäure-iso-tributylester.

Die Gruppe D wird gegebenenfalls durch saure Hydrolyse oder (im Falle der Oxazoline) mittels Reduktion und anschließender saurer Hydrolyse in eine Verbindung der Formel (I) mit Z gleich -CHO überführt. Es ist auch möglich, die Aldehyd-Schutzgruppe in einem Eintopfverfahren abzuspalten und ohne vorherige Isolierung einer Verbindung der Formel (IV) mit D¹ gleich D eine Verbindung der Formel (IV) mit D¹ gleich -CHO zu erhalten.

Es ist ebenfalls möglich, aus Verbindungen der Formel (IV) durch Umsetzung mit Alkoholen der Formel HO-(C₁-C₁₂)-Alkyl, HO-(C₂-C₁₂)-Alkenyl, HO-(C₂-C₁₂)-Alkinyl, HO-Aryl oder HO-Alkylaryl acyclische Boronsäureester der Formel (IVa) 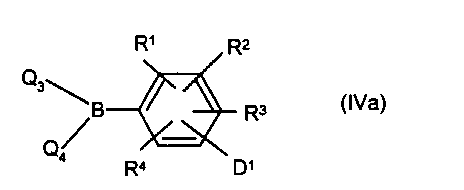 worin Q³ und Q⁴ einen Rest der genannten Alkohole darstellen, herzustellen oder durch Umsetzung mit den mehrwertigen Alkoholen (C₃-C₁₂)-Cycloalkan-1,2-diol, (C₅-C₁₂)-Cycloalken-1,2-diol, (C₅-C₁₂)-Cycloalkan-1,3-diol, (C₅-C₁₂)-Cycloalken-1,3-diol oder mit Alkoholen der Formeln (1) bis (6) 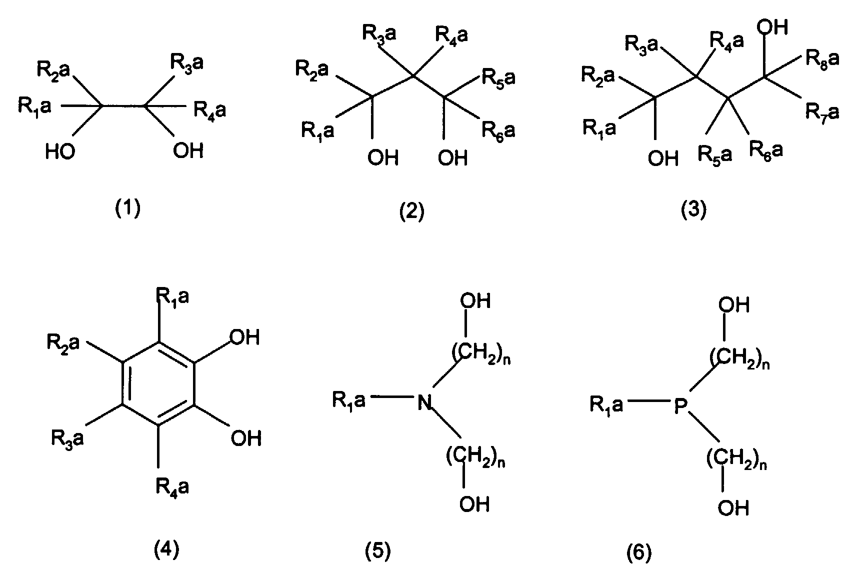 worin R₁a bis R₈a unabhängig voneinander die Bedeutung Wasserstoff, C₁-C₁₂-Alkyl, C₁-C₁₂-Hydroxyalkyl, C₂-C₁₂-Alkenyl, C₂-C₁₂-Alkinyl, C₃-C₁₂-Cycloalkyl, (C₁-C₁₂)-Alkoxy, O-Phenyl, O-Benzyl, Aryl, Heteroaryl, Fluor, Chlor, NH₂, NH(Alkyl), N(Alkyl)₂, N[Si(C₁-C₄-Alkyl)₃]₂, CF₃ haben, und/oder zwei benachbarte Reste R₁a bis R₈a zusammen einen 5- oder 6-gliedrigen aliphatischen oder aromatischen Ring bilden und worin n eine ganze Zahl von 2 bis 12 bedeutet, einen cyclischen Borsäureester der Formel (IVa) worin Q³ und Q⁴ zusammen einen zweiwertigen Rest der genannten mehrwertigen Alkohole bedeuten, herzustellen.

Die Verbindungen der Formel (IVa) lassen sich durch saure Hydrolyse wieder in Verbindungen der Formel (IV) überführen.

Die Verbindungen der Formel (I) mit Z gleich CHO, X oder -CH₂Y lassen sich ebenfalls durch Umsetzung mit den vorstehend genannten Alkoholen zu den Verbindungen der Formel (Ia) umsetzen.

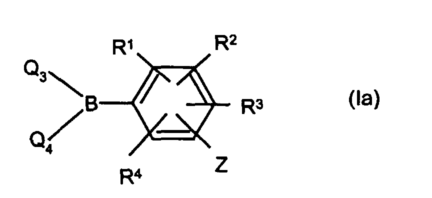

Die Verbindungen der Formel (Ia) lassen sich durch saure Hydrolyse wieder in Verbindungen der Formel (I) überführen.

Die Umsetzung der Verbindung der Formel (I) oder der Formel (IV) mit den den Resten Q³ und Q⁴ zugrundeliegenden Alkoholen wird zweckmäßigerweise in Gegenwart eines gegenüber den Reaktionsteilnehmern inerten organischen Lösungsmittels wie Tetrahydrofuran, Methyl-tert-butylether, Toluol, o-, m-, p-Xylol, Hexan oder Heptan bei einer Temperatur von 20°C bis zur Siedetemperatur des verwendeten Lösungsmittels durchgeführt. Im Falle von Diolen oder anderen mehrwertigen Akoholen ist auch die Verwendung von Methanol, Ethanol, n- oder iso-Propanol als inertes Lösungsmittel möglich. Das den Resten Q³ und Q⁴ zugrundeliegende Diol wird zweckmäßig in einer äquimolaren Menge, bezogen auf die Boronsäure, eingesetzt.

Bevorzugte Reste Q³ und Q⁴ sind -O-(C₁-C₆)alkyl, -O-(C₂-C₆)alkenyl, -O-(C₃-C₆)alkinyl, -O-Phenyl, -O-Benzyl, oder Q³ und Q⁴ bilden zusammen mit dem Boratom einen cyclischen Boronsäureester mit den Alkoholen: Ethylenglykol, 1,2-Propandiol, 1,3-Propandiol, 1,4-Butandiol, 2,2-Dimethylpropan-1,3-diol, Brenzkatechin, Pinakol, 2,3-Dihydroxynaphthalin, 1,2-Dihydroxycyclohexan, 1,3-Dihydroxy-cyclopentan oder 1,2-Dihydroxycyclooctan. Besonders bevorzugte Reste Q³ und Q⁴ bilden zusammen mit dem Boratom einen cyclischen Boronsäureester mit den Alkoholen Ethylenglykol, 1,3-Propandiol, 2,2-Dimethyl-1,3-diol, Pinakol und Brenzkatechin.

Die trimeren Verbindungen der Formel (Ib) bzw. (IVb) lassen sich z.B. durch Erhitzen auf 40 bis 100°C, vorzugsweise 50 bis 75°C, aus den entsprechenden monomeren Verbindungen der Formel (I) bzw. (IV) herstellen.

Das erfindungsgemäße Verfahren ist im nachfolgenden Schema 1 dargestellt:

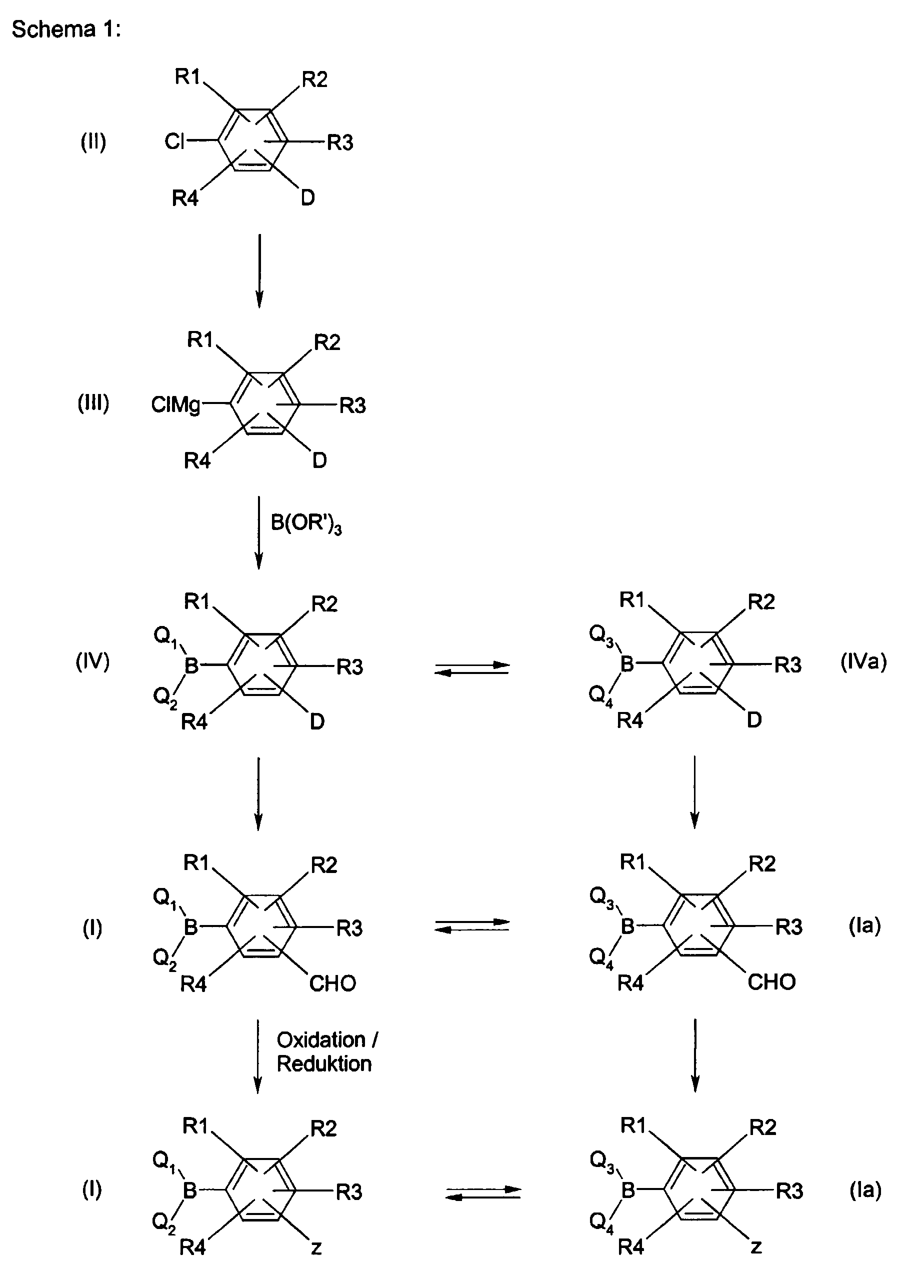

Die Aldehydgruppe wird zunächst in eine gegenüber Magnesium unreaktive Form überführt, beispielsweise in ein cyclisches oder acyclisches Acetal, vorzugsweise Ethylenglykolacetal, Dimethyl- oder Diethylacetal, ein Oxazolidin oder ein Oxazolin. Chlorbenzaldehyde lassen sich nach üblichen Methoden mit 1,2-Diolen zu entsprechend substituierten 1,3-Dioxolanen der allgemeinen Formel (V), oder mit Trialkylorthoestern, wie Trimethylorthoameisensäureester, Triethylorthoameisensäureester, Triisopropylorthoameisensäureester oder entsprechende Orthoessigsäureester, zu acyclischen Acetalen der allgemeinen Formel (VI) umsetzen. Bevorzugt sind dabei die Umsetzungen mit Ethylenglykol, Brenzkatechin, Trimethylorthoameisensäureester, Triethylorthoameisensäureester oder Triisopropylorthoameisensäureester.

Chlorbenzaldehyde lassen sich mit am Stickstoff monosubstituierten 1,2-Aminoalkoholen zu entsprechend substituierten Oxazolidinen der allgemeinen Formel (VII) durch azeotrope Destillation des Reaktionswassers umsetzen (T.H. Fife, L. Hagopian, J. Am. Chem. Soc. 1968, 1007- 1014). Bevorzugte Aminoalkohole sind N-Methyl-2-aminoethanol, N-Ethyl-2-aminoethanol, N-Propyl-2-aminoethanol, N-Butyl-2-aminoethanol, N-Phenyl-2-amino-ethanol, N-Benzyl-2-amino-ethanol, N-Methyl-2-aminopropanol, N-Ethyl-2-aminopropanol, N-Propyl-2-aminopropanol, N-Butyl-2-aminopropanol, besonders bevorzugt N-Ethyl-2-aminoethanol, N-Butyl-2-aminoethanol, N-Phenyl-2-amino-ethanol, N-Benzyl-2-amino-ethanol.

Weiterhin besteht die Möglichkeit, das entsprechend substituierte Chlorbenzoylchlorid mit 1,2-Aminoalkoholen nach einer in J. Org. Chem. 1988, 53, 345 - 352 beschriebenen Methode zu Oxazolinen umzusetzen.

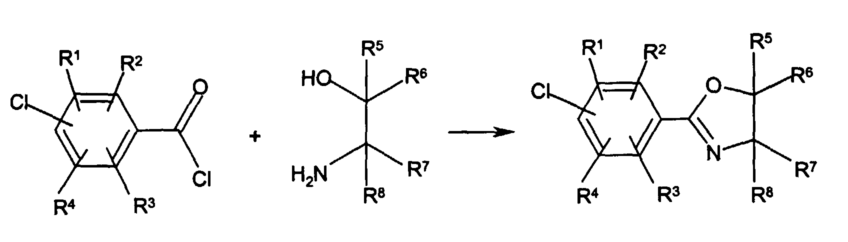

Bevorzugt wird dabei 2-Amino-2-methylpropan-1-ol sowie 2-Aminoethanol eingesetzt.

Die Verbindung der Formel (II) wird erfindungsgemäß in die Grignard-Verbindung der Formel (III) unter Einsatz von Mg-Pulver oder -Spänen, sowie in Gegenwart i) einer Anthracen-Verbindung, oder ii) einer Anthracen-Verbindung und eines Übergangsmetalhalogenids, oder iii) einer Anthracen-Verbindung und eines Magnesiumhalogenids, oder iv) einer Anthracen-Verbindung, eines Übergangsmetallhalogenids und eines Magnesiumhalogenids, oder v) eines Übergangsmetallhalogenids, oder vi) eines Übergangsmetallhalogenids und eines Magnesiumhalogenids überführt.

Als Anthracen-Verbindungen können unsubstituiertes Anthracen oder Mg-Anthracen, substituiertes, z.B. mit 1 bis 4 (C₁-C₄)-Alkylgruppen oder Phenylgruppen substituiertes Anthracen oder Mg-Anthracen, insbesondere 9,10-Diphenylanthracen oder Mg-9,10-diphenylanthracen, eingesetzt werden. Die Anthracenverbindungen können in Mengen von 0,5 bis 100 Mol-%, vorzugsweise 1 bis 10 Mol-%, bezogen auf den Halogenaromaten, zugegeben oder auch in situ gebildet werden. Als Übergangsmetallhalogenide werden vorzugsweise Chloride oder Bromide, insbesondere FeCl₂, MnCl₂, FeBr₂, MnBr₂, eingesetzt. Die Übergangsmetallhalogenide können in Mengen von 0,5 bis 100 Mol-%, vorzugsweise 1 bis 10 Mol-%, bezogen auf den Halogenaromaten, zugegeben werden.
Als Magnesiumhalogenide kommen MgCl₂ und MgBr₂ in Betracht. Sie können in Mengen von 0,5 bis 100 Mol-%, vorzugsweise 1 bis 10 Mol-%, bezogen auf den Halogenaromaten, zugegeben werden.

Die Grignardreaktion wird bevorzugt bei der Siedetemperatur des entsprechenden Lösemittels und unter Schutzgasatmosphäre durchgeführt. Als Lösemittel kommen üblicherweise Tetrahydrofuran, Diethylether, Monoglyme oder Diglyme sowie eine Lösung von N,N,N',N'-Tetramethyl-ethylendiamin in Toluol in Betracht. Es kann vorteilhaft sein, das Magnesium vor Reaktionsbeginn gemäß einer in Y.-H. Lai, Synthesis 585 - 604 (1981) beschriebenen Methode zu aktivieren oder die Grignardreaktion in Gegenwart kleiner Mengen, z.B. 0,01 bis 10 Mol-%, vorzugsweise 0,1 bis 1 Mol%, bezogen auf den Halogenaromaten, eines Halogenalkans, wie z.B. 1,2-Dibromethan, Bromethan oder Jodmethan, durchzuführen.

Die Verbindung der Formel (III) ist neu und ebenfalls Gegenstand der vorliegenden Erfindung. Die Verbindung der Formel (III) kann durch Abdestillieren des Lösemittels unter Schutzgasatmosphäre isoliert werden.

Um zu Phenylboronsäuren zu gelangen, wird die Verbindung der Formel (III), bevorzugt ohne Zwischenisolierung, mit dem Borsäureester der Formel B(OR 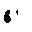 )₃, insbesondere mit B(OCH₃)₃, B(OEt)₃ oder B(O*i*Pr)₃, umgesetzt und anschließend zu einer Verbindung der Formel (IV) wäßrig hydrolysiert. Die Umsetzung mit dem Borsäureester wird zweckmäßigerweise bei einer Temperatur von -80°C bis +20°C, vorzugsweise von -50°C bis +10°C, insbesondere von -25°C bis 0°C, durchgeführt. Der Borsäureester wird zweckmäßig in einer 1 bis 1,5-fachen molaren Menge, bezogen auf die Grignardverbindung, eingesetzt.

Die Verbindung der Formel (IV) kann anschließend sauer hydrolysiert werden, z.B. mit Schwefelsäure bei pH 0 bis 3. Im Falle, daß D eine Acetal- oder eine Oxazolidin-Gruppe ist, wird vorzugsweise so verfahren, daß nach Beendigung des Zudosierens des Borsäureesters das Reaktionsgemisch auf Eiswasser gegeben und die Suspension auf pH 1 bis 2 gestellt wird, z.B. mit Schwefelsäure. Es entsteht die Verbindung der Formel (IV) mit D¹ gleich CHO und Q¹ und Q² jeweils gleich OH.

Oxazoline, d.h. D ist ein Rest der Formel (VIII), lassen sich nach einer in J. Am. Chem. Soc. 1983, 105, 1586- 1590 beschriebenen Methode durch Alkylierung am Stickstoff mit Alkylhalogeniden, z.B. Methyliodid, Methylbromid, Ethyliodid oder Ethylbromid, oder mit Dialkylsulfaten, z.B. Dimethylsulfat oder Diethylsulfat, Hydrierung mit komplexen Metallhydriden, wie LiAIH₄, NaBH₄ oder NaBH₃(CN), und anschließender saurer Hydrolyse in den Aldehyd überführen.

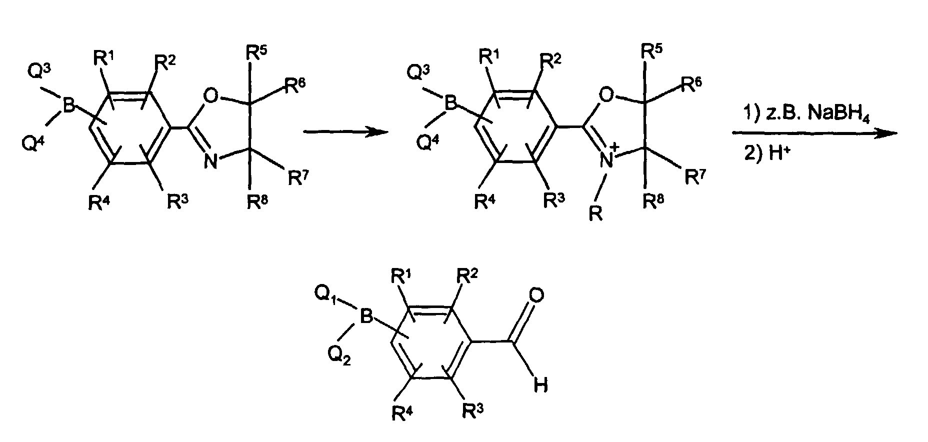

Bei der Hydrolyse wird die Aldehyd-Schutzgruppe abgespalten und der Boronsäureester in die freie Boronsäure überführt. Die Formyl-phenylboronsäure der Formel (I) mit Z gleich CHO kann aus der organischen Phase des Reaktionsgemisches isoliert werden.

Durch Oxidation oder Reduktion des Aldehyds können Folgeprodukte gemäß Schema 2 hergestellt werden. In diesem Schema haben Q₁₀ und Q₂₀ die Bedeutung Q₁ und Q₂, oder bedeuten Q₃ und Q₄, wenn die Formylphenylboronsäure vor der Oxidation oder der Reduktion mit einem den Resten Q₃ und Q₄ zugrundeliegenden Alkohol in einem inerten organischen Lösemittel nach oben beschriebener Methode verestert wird, was besonders dann zweckmäßig ist, wenn nachfolgend oxidiert wird. 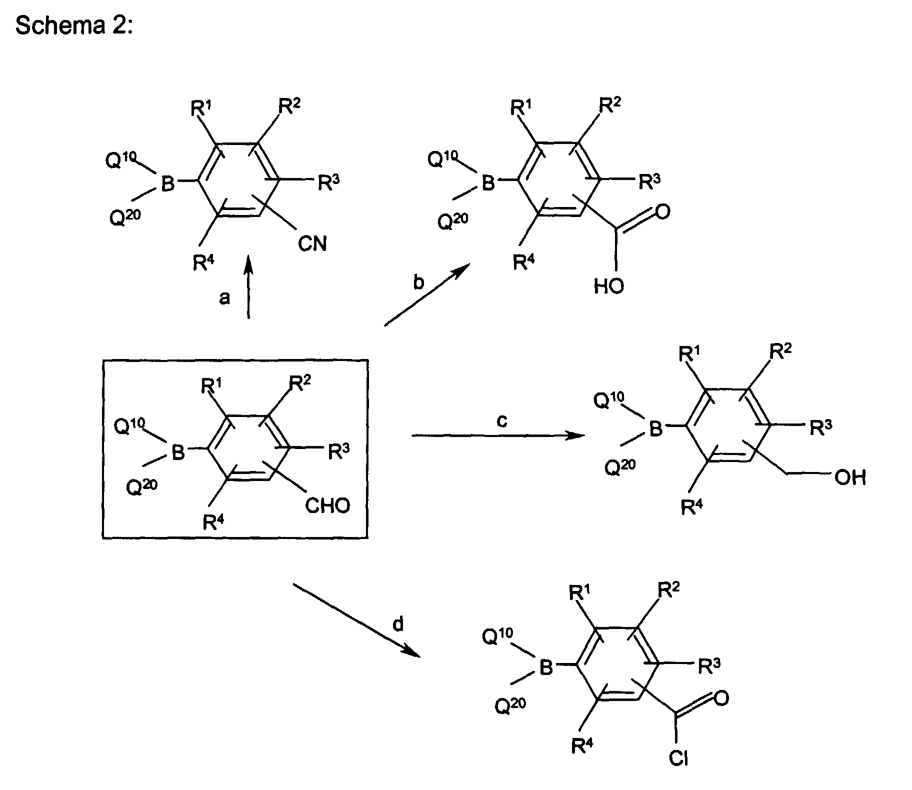
a) Aus Formylphenylboronsäure und ihren -boronsäureestern erhält man durch Umsetzung mit Hydroxylamin oder Hydroxylammoniumsalzen und anschließender Dehydratisierung des entstandenen Oxims die entsprechende Cyanophenylboronsäure der Formel (I) mit Z gleich CN. Die Dehydratisierung kann durch Erhitzen in Eisessig oder in Acetanhydrid (J. Chem. Soc. 1933, IX, 43) erfolgen. Gemäß einer in EP-A1-0 790 234 vorgeschlagenen Methode erhält man die Nitril-Funktion durch Umsetzung des Benzaldehyd-Derivates mit Hydroxylaminsulfat in Anwesenheit einer tertiären Aminbase und azeotroper Destillation des Reaktionswassers.
b) Die entsprechende Carboxyphenylboronsäure der Formel (I), mit Z gleich COOH, läßt sich durch Oxidation der Formylphenylboronsäure mit Barium- oder Kaliumpermanganat, z.B. nach US-A-5 631 364, herstellen.
c) Die Verbindung der Formel (I) mit Z = CH₂OH kann durch Reduktion mit Raney-Nickel / Wasserstoff oder mit komplexen Metallhydriden, wie LiAIH₄ oder NaBH₄, erhalten werden.
d) Die Verbindung der Formel (I) mit Z = COCl kann nach einer in Ginsburg, D., J. Amer. Chem. Soc., 1951, 73, 702 -704 beschriebenen Methode durch Umsetzung von Formylphenylboronsäure mit t-BuOCl in Tetrachlorkohlenstoff erhalten werden.
   Ausgehend von Cyanophenylboronsäure oder -boronsäureestern können gemäß Schema 3 weitere Folgeprodukte hergestellt werden. 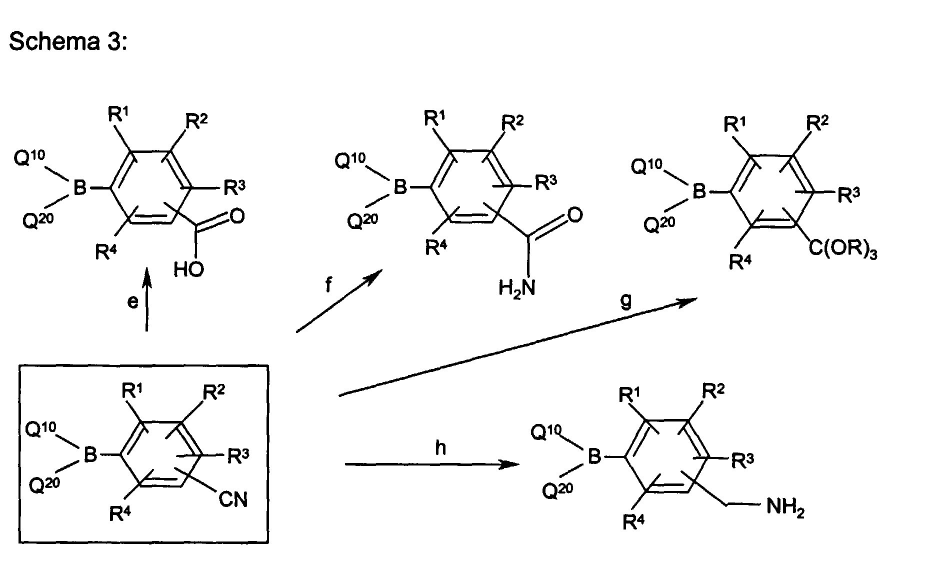
e) Carboxyphenylboronsäuren können durch Hydrolyse der Cyanophenylboronsäure, z.B. analog M.V. Sargent, J. Chem. Soc. Perkin Trans. 1, 1987(1), 231 erhalten werden.
f) Carbonamidophenylboronsäuren können nach einer in Liu, K.-T.; et al., Synthesis 1988 (9), 715 beschriebenen Methode, ausgehend von Cyanophenylboronsäure, mit MnO₂ auf Kieselgel und Wasser in einem organischen Lösungsmittel hergestellt werden.
g) Carbonsäureorthoester-phenylboronsäuren kann man nach einer in P. Hamann et al., Synthetic Commun. (1989) 19 (9-10), 1509-1518 beschriebenen Methode aus Cyanophenylboronsäure mit dem korrespondierenden Alkohol ROH unter Zugabe von wasserfreiem Chlorwasserstoff zum korrespondierenden Orthoester herstellen, worin R die Bedeutung C₁-C₁₂-Alkyl, Aryl, bevorzugt Methyl, Ethyl und Phenyl haben kann.
h) Methylenamino-phenylboronsäuren können nach einer in B.S. Biggs et al., Org. Synth. 1947, 27, beschriebenen Methode durch Hydrierung mit Wasserstoff und Raney-Nickel als Katalysator hergestellt werden.

### Beispiel 1

Zu einer Lösung von 2 g (11 mmol) Anthracen in 100 ml THF wurden 2,7 g (110 mmol) Magnesiumspäne gegeben und mit einigen Tropfen 1,2-Dibromethan versetzt. Nach ca. 2 Stunden Rühren bei Raumtemperatur hatte sich der leuchtend orange Niederschlag von Magnesium-Anthracen gebildet. Im Rückfluß wurde die Suspension innerhalb von 1 Stunde mit einer Lösung von 19 g (100 mmol) 4-Chlorbenzaldehyddimethylacetal in 100 ml THF versetzt. Nach 4 Stunden Rückfluß betrug die Ausbeute an 4-Chlor-Mg-benzaldehyddimethylacetal entsprechend GC-Analytik (nach Hydrolyse mit verdünnter HCl als Benzaldehyd bestimmt) 90 %.

### Beispiel 2

2,7 g(110 mmol) Magnesiumspäne wurden mit 100 ml THF, 1,18 g (5,5 mmol) wasserfreiem Eisen(II)bromid, 1,01 g (5,5 mmol) Magnesiumbromid und einigen Tropfen Dibromethan versetzt. Nach ca. 2 Stunden Rühren bei Raumtemperatur färbte sich die Lösung dunkelbraun bis schwarz. Im Rückfluß wurde die Suspension innerhalb von 1 Stunde mit einer Lösung von 19 g (100 mmol) 4-Chlorbenzaldehyddimethylacetal in 100 ml THF versetzt. Nach 4 Stunden Rückfluß betrug die Ausbeute an 4-Chlor-Mg-benzaldehyddimethylacetal entsprechend GC-Analytik (nach Hydrolyse mit verdünnter HCl als Benzaldehyd bestimmt) 95 %.

### Beispiel 3 4-Formyl-boronsäure

Bei -50°C wurden zu einer Suspension von 10,4 g (100 mmol) Trimethylborat in 300 ml THF innerhalb von 3 Stunden eine Grignard-Lösung, wie man sie aus Beispiel 1 oder 2 erhält, getropft. Die weiße Suspension wurde nach Ende der Zudosierung auf 200 g Eiswasser gegossen. Die Suspension wurde mit konz. H₂SO₄ auf pH 1 bis 2 eingestellt. Nach vollständiger Hydrolyse wurden die Phasen getrennt. Man erhielt 12,45 g (83 mmol) 4-Formylboronsäure.

### Beispiel 4

Beispiel 3 wurde mit einer Reaktionstemperatur von -15°C wiederholt: Ausbeute 11,85 g (79mmol) 4-Formylboronsäure.

### Beispiel 5 4-(4,4,5,5-Tetramethyl-[1,3,2]dioxaborolan-2-yl)-benzaldehyd

Eine Suspension von 5 g (33.3 mmol) 4-Formylphenylboronsäure und 3.93 g (33.3 mmol) Pinakol in 25 ml Toluol wurde am Wasserabscheider zum Rückfluß erhitzt. Nach vollständiger Entfernung des Reaktionswassers wurde eine Klärfiltration durchgeführt und das Lösungsmittel bis zur beginnenden Kristallisation des Produktes abdestilliert. Man erhielt 7.2 g (31 mmol) Produkt.

### Beispiel 6 4-Cyano-phenylboronsäure

Zu 15 g (100 mmol) 4-Formylphenylboronsäure, 10 g Wasser, 5 g (60 mmol) Pyridin und 200 ml Toluol wurden bei 70°C 17 g (100 mmol) Hydroxylaminsulfat gegeben. Anschließend wurde am Wasserabscheider zum Rückfluß erhitzt. Nach vollständiger Entfernung des Wassers wurde von den Pyridiniumsalzen abgetrennt. Man erhielt 12,7 g (87 %) 4-Cyanophenylboronsäure.

### Beispiel 7 4-Cyano-phenylboronsäurepinakolester

Zu 23.2 g (100 mmol) 4-Formylphenylboronsäurepinakolester, 10 g Wasser, 5 g (60 mmol) Pyridin und 200 ml Tolual wurden bei 70°C 17 g (100 mmol) Hydroxylaminsulfat gegeben. Anschließend wurde am Wasserabscheider zum Rückfluß erhitzt. Nach vollständiger Entfernung des Wassers wurde von den Pyridiniumsalzen abgetrennt. Man erhielt 20,8 g (91 %) 4-Cyanophenylboronsäure.

### Beispiel 8 4-Carboxy-phenylboronsäure

14,5 g (100 mmol) 4-Cyanophenylboronsäure wurde in einer Mischung von 11 g (200 mmol) Kaliumhydroxid und 10 g Wasser in 100 ml Methanol gelöst und bis zum Ende der Ammoniakgas-Entwicklung zum Rückfluß erhitzt. Man erhielt 14,9 g (90 mmol) 4-Carboxyphenylboronsäure.

### Beispiel 9 Veresterung von 4-(Carboxy)-phenylboronsäure

4-Carboxyphenylboronsäure und eine äquimolare Menge des entsprechenden Diols gemäß Tabelle 1 werden in 200 ml Toluol zum Rückfluß erhitzt. Nachdem das entstandene Wasser an einem Wasserabscheider vollständig abgetrennt wurde (nach ca. 1 h), wird die Lösung heiß durch eine Saugnutsche filtriert. Anschließend wird das Lösungsmittel abdestilliert.

**Tabelle 1**

| Diol | Menge Edukt | Produkt | Ausbeute |
|---|---|---|---|
| Pinakol | 30 g (180 mmol) | 4-(4,4,5,5-Tetramethyl-[1,3,2]dioxaborolan-2-yl)-benzoesäure | 43.1 g (97%) |
| Neopentylglykol | 16.6 g (100 mmol) | 4-(5,5-Dimethyl-[1,3,2]dioxaborinan-2-yl)-benzoesäure | 22 g (94%) |
| Ethlenglykol | 200 g (1.2 mol) | 4-[1,3,2]Dioxaborolan-2-yl-benzoesäure | 227.1 g (98 %) |
| Diethanolamin | 20 g (120 mmol) | 4-[1,3,6,2]Dioxazaborocan-2-yl-benzoesäure | 27.5 g (98 %) |

### Beispiel 10 4-Carboxamido-phenylboronsäure

10 g (68 mmol) 4-Cyanophenylboronsäure wurden in einer Mischung von 12 g (135 mmol) Mangandioxid, 10 g Wasser und 150 ml Cyclohexan 6 Stunden im Rückfluß gekocht. Es wurden 9,6 g (58 mmol) 4-Phenylboronsäurecarbonsäureamid isoliert.

### Beispiel 11 4-Phenylboronsäure-carbonsäure(trimethyl)orthoester

30 g (203 mmol) 4-Cyanophenylboronsäure wurden in 200 ml Methanol gelöst und mit 200 ml 1 M Chlorwasserstofflösung in Diethylether versetzt. Das Reaktionsgemisch wurde 8 Stunden am Rückfluß gekocht. Man erhielt 38,5 g (170 mmol)4-Phenylboronsäurecarbonsäure(trimethyl)orthoester.

### Beispiel 12 4-(Methylamino)-phenylboronsäure

30 g (203 mmol) 4-Cyanophenylboronsäure wurden in 200 ml Tetrahydrofuran gelöst und mit 0,5 g Raney-Nickel versetzt. Durch das Reaktionsgemisch wurde für 8 Stunden ein Wasserstoff-Strom geleitet. Man erhielt 29,8 g (199 mmol) 4-(Methylaminno)-phenylboronsäure.

### Beispiel 13 4-(Hydroxymethyl)-phenylboronsäure

15 g (100 mmol) 4-Formylphenylboronsäure wurden in 200 ml Tetrahydrofuran gelöst und mit 0,25 g Raney-Nickel versetzt. Durch das Reaktionsgemisch wurde für 8 Stunden ein Wasserstoff-Strom geleitet. Man erhielt 14,8 g (97 mmol) 4-(Hydroxymethyl)-phenylboronsäure.

### Beispiel 14 4-(Hydroxymethyl)-phenylboronsäurepinakolester

Analog zu Beispiel 12 wurde 12 g (52 mmol) 4-Formylphenylboronsäurepinakolester in 100 ml Methanol hydriert. Man erhielt 11,7 g (50 mmol) 4-(Hydroxymethyl)-phenyl-boronsäure.

## Patentansprüche

1. Verfahren zur Herstellung einer Verbindung der Formel (I) worin 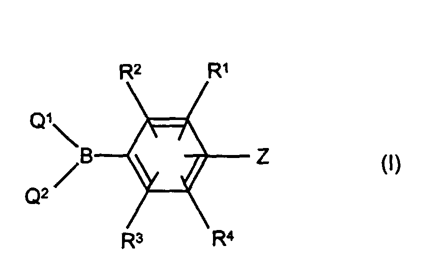
Q¹ und Q² jeweils OH oder zusammen einen zweiwertigen Rest der Formel (Ib) bedeuten 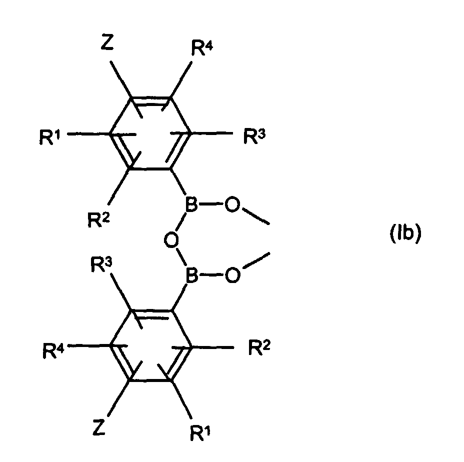
Z die Bedeutung -CHO, D, -CH₂Y oder X hat, wobei D eine geschützte Aldehydgruppe, Y Hydroxyl oder Amino, und X Cyano, COOH, COCl, CONH₂ oder C(OR)₃ mit R gleich C₁-C₅-Alkyl oder Phenyl, bedeuten, und wobei sich Z in ortho-, meta- oder para-Position zum Boronsäurerest befindet;
R¹ bis R⁴ unabhängig voneinander die Bedeutung Wasserstoff, C₁-C₁₂-Alkyl, C₂-C₁₂-Alkenyl, C₂-C₁₂-Alkinyl, C₃-C₁₂-Cycloalkyl, (C₁-C₁₂-)-Alkoxy, O-Phenyl, O-Benzyl, Aryl, Heteroaryl, Fluor, N(Alkyl)₂, N[Si(C₁-C₄-Alkyl)₃]₂ oder CF₃ haben, oder R¹ und R², und/oder R³ und R⁴, zusammen einen 5- oder 6-gliedrigen aliphatischen oder aromatischen Ring bilden;
dadurch gekennzeichnet, daß man
a) eine Verbindung der Formel (II) 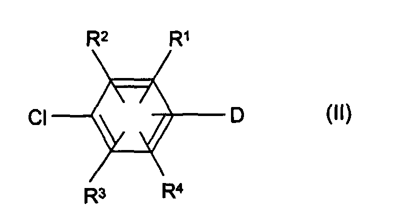 mit Magnesium, sowie in Gegenwart
i) einer Anthracen-Verbindung und gegebenenfalls eines Übergangsmetallhalogenids und gegebenenfalls eines Magnesiumhalogenids; oder
ii) eines Übergangsmetallhalogenids und gegebenenfalls eines Magnesiumhalogenids,
wobei die Anthracen-Verbindung eine Verbindung aus der Gruppe Anthracen, Mg-Anthracen, substituiertes Anthracen und substituiertes Mg-Anthracen ist, zu einem Arylmagnesiumchlorid der Formel (III) umsetzt 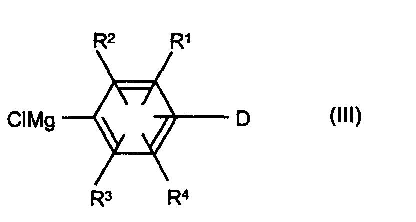
b) die Verbindung der Formel (III) mit einem Borsäureester der Formel B(OR 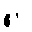 )₃, worin R 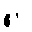 gleich oder verschieden voneinander ist und für einen geradkettigen oder verzweigten (C₁-C₈)-Alkylrest, einen unsubstituierten oder durch eine oder zwei (C₁-C₄)-Alkylgruppen oder (C₁-C₄)-Alkoxygruppen substituierten Phenylrest, steht, umsetzt und zu einer Verbindung der Formel (IV) hydrolysiert, worin 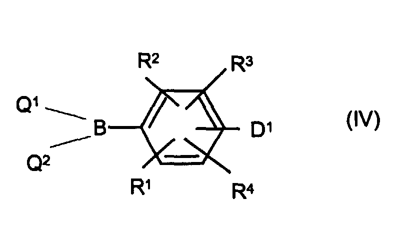
D¹ die Bedeutung CHO oder D hat;
Q¹ und Q² jeweils OH oder zusammen einen zweiwertigen Rest der Formel (IVb) bedeuten 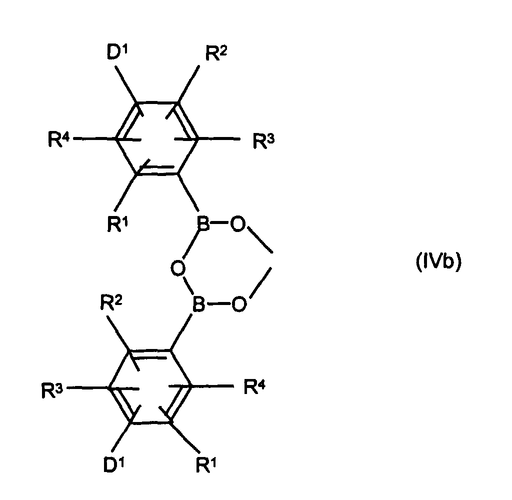
c) gegebenenfalls die Verbindung der Formel (IV) oder (IVb) mit D¹ gleich CHO in eine Verbindung der Formel (I) mit Z gleich X oxidiert, oder gegebenenfalls in eine Verbindung der Formel (I) mit Z gleich CH₂Y reduziert.

2. Verfahren nach Anspruch 1, dadurch gekennzeichnet, daß R¹ bis R⁴ die Bedeutung Wasserstoff, Methyl, Ethyl, Propyl, Butyl, Methoxy, Ethoxy, Propoxy, Butoxy oder Fluor haben.

3. Verfahren nach Anspruch 1 oder 2, dadurch gekennzeichnet, daß D ein Acetal der Formel (V) oder (VI) 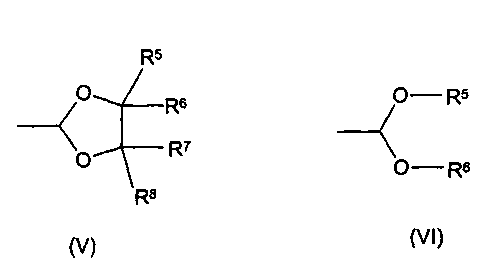 worin R⁵ bis R⁸ gleich oder verschieden sind und die Bedeutung Wasserstoff, C₁-C₁₂-Alkyl oder Phenyl haben, oder R⁶ und R⁷ zusammen einen 5- oder 6-gliedrigen aliphatischen oder aromatischen Ring bilden; oder D ist ein Oxazolidin der Formel (VII) oder ein Oxazolin der Formel (VIII) 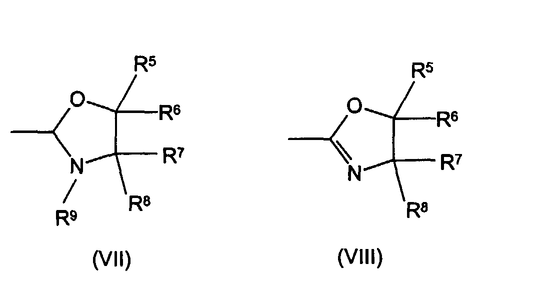 worin R⁵ bis R⁸ wie vorstehend definiert sind und R⁹ die Bedeutung C₁-C₆-Alkyl, Phenyl oder Benzyl, gegebenenfalls am Aromaten substituiert, hat.

4. Verfahren nach einem oder mehreren der Ansprüche 1 bis 3, dadurch gekennzeichnet, daß der Borsäureester B(OR')₃ Borsäuretrimethylester, Borsäuretriethylester, Borsäuretri-n-propylester, Borsäuretriisopropylester, Borsäuretri-n-butylester oder Borsäuretri-iso-butylester ist.

5. Verfahren nach einem oder mehreren der Ansprüche 1 bis 4, dadurch gekennzeichnet, daß der Schritt a) in Gegenwart von Anthracen, Mg-Anthracen, 9,10-Diphenylanthracen oder Mg-9,10-Diphenylanthracen durchgeführt wird.

6. Verfahren nach einem oder mehreren der Ansprüche 1 bis 5, dadurch gekennzeichnet, daß der Schrift a) in Gegenwart von MgCl₂ oder MgBr₂, und in Gegenwart von FeCl₂, MnCl₂, FeBr₂ oder MnBr₂ durchgeführt wird.

7. Verfahren nach einem oder mehreren der Ansprüche 1 bis 6, dadurch gekennzeichnet, daß die Verbindung der Formel (IV) mit einem Alkohol der Formel HO-(C₁-C₁₂)-Alkyl, HO-(C₂-C₁₂)-Alkenyl, HO-(C₂-C₁₂)-Alkinyl, HO-Aryl, HO-Alkylaryl, (C₃-C₁₂)-Cycloalkan-1,2-diol, Cycloalkan-1,2-diol, (C₅-C₁₂)-Cycloalken-1,2-diol, (C₅-C₁₂)-Cycloalkan-1,3-diol, (C₅-C₁₂)-Cycloalken-1,3-diol oder mit einem Alkohol der Formeln (1) bis (6) 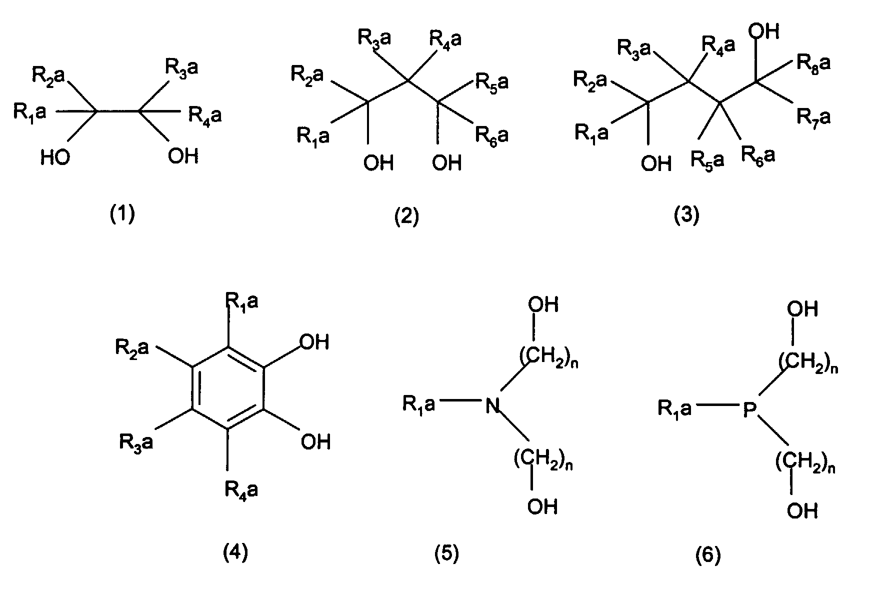 worin R₁a bis R₈a unabhängig voneinander die Bedeutung Wasserstoff, C₁-C₁₂-Alkyl, C₁-C₁₂-Hydroxyalkyl, C₂-C₁₂-Alkenyl, C₂-C₁₂-Alkinyl, C₃-C₁₂-Cycloalkyl, (C₁-C₁₂)-Alkoxy, O-Phenyl, O-Benzyl, Aryl, Heteroaryl, Fluor, Chlor, NH₂, NH(Alkyl), N(Alkyl)₂, N[Si(C₁-C₄-Alkyl)₃]₂, CF₃ haben, und/oder zwei benachbarte Reste R₁a bis R₈a zusammen einen 5- oder 6-gliedrigen aliphatischen oder aromatischen Ring bilden und worin n eine ganze Zahl von 2 bis 12 bedeutet, verestert wird.

8. Verfahren nach einem oder mehreren der Ansprüche 1 bis 7, dadurch gekennzeichnet, daß die Verbindung der Formel (I) mit einem Alkohol der Formel HO-(C₁-C₁₂)-Alkyl, HO-(C₂-C₁₂)-Alkenyl, HO-(C₂-C₁₂)-Alkinyl, HO-Aryl, HO-Alkylaryl, (C₃-C₁₂)-Cycloalkan-1,2-diol, Cycloalkan-1,2-diol, (C₅-C₁₂)-Cycloalken-1,2-diol, (C₅-C₁₂)-Cycloalkan-1,3-diol, (C₅-C₁₂)-Cycloalken-1,3-diol oder mit einem Alkohol der Formeln (1) bis (6) 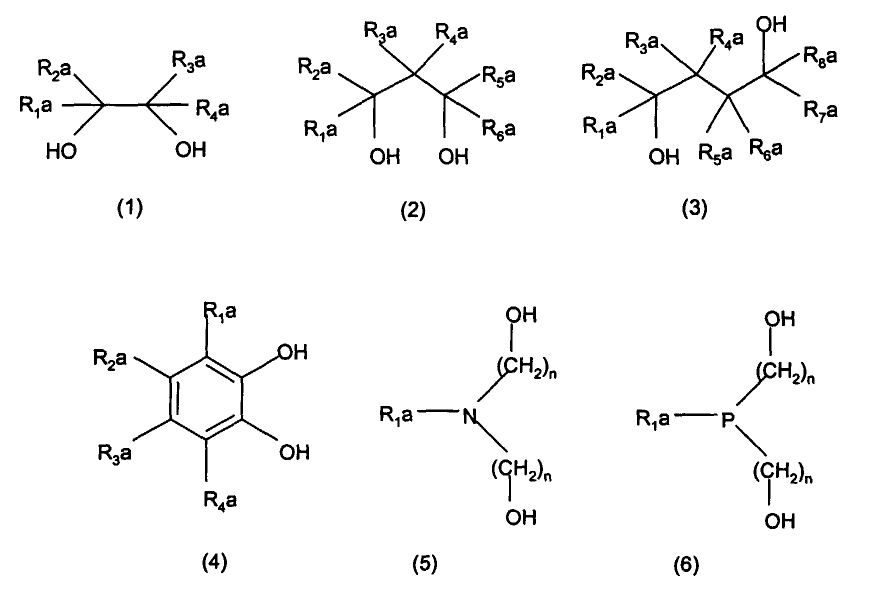 worin R₁a bis R₈a unabhängig voneinander die Bedeutung Wasserstoff, C₁-C₁₂-Alkyl, C₁-C₁₂-Hydroxyalkyl, C₂-C₁₂-Alkenyl, C₂-C₁₂-Alkinyl, C₃-C₁₂-Cycloalkyl, (C₁-C₁₂)-Alkoxy, O-Phenyl, O-Benzyl, Aryl, Heteroaryl, Fluor, Chlor, NH₂, NH(Alkyl), N(Alkyl)₂, N[Si(C₁-C₄-Alkyl)₃]₂, CF₃ haben, und/oder zwei benachbarte Reste R₁a bis R₈a zusammen einen 5- oder 6-gliedrigen aliphatischen oder aromatischen Ring bilden und worin n eine ganze Zahl von 2 bis 12 bedeutet, verestert wird.

9. Verfahren nach Anspruch 7 oder 8, dadurch gekennzeichnet, daß nach der Veresterung die Aldehydgruppe zur Carboxy-, Nitril- oder Carbonylchlorid-Gruppe oxidiert wird.

10. Verfahren nach Anspruch 7 oder 8, dadurch gekennzeichnet, daß nach der Veresterung die Aldehydgruppe zur Methylamino- oder Hydroxymethylgruppe reduziert wird.

11. Arylmagnesiumchlorid der Formel (III) 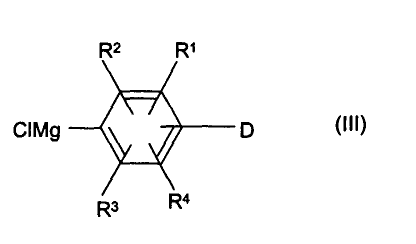 worin R¹ bis R⁴ und D wie in einem oder mehreren der Ansprüche 1 bis 3 definiert sind.
